(19) Europäisches Patentamt
European Patent Office
Office européen des brevets

(11) **EP 3 817 499 B1**

(12) **EUROPEAN PATENT SPECIFICATION**

(45) Date of publication and mention of the grant of the patent:
**28.09.2022 Bulletin 2022/39**

(21) Application number: **19843564.6**

(22) Date of filing: **10.04.2019**

(51) International Patent Classification (IPC):
*H04W 74/08* (2009.01)    *H04W 74/00* (2009.01)

(52) Cooperative Patent Classification (CPC):
**H04W 74/006**

(86) International application number:
**PCT/CN2019/082138**

(87) International publication number:
**WO 2020/024616 (06.02.2020 Gazette 2020/06)**

(54) **RANDOM ACCESS METHOD AND RELATED DEVICE**

DIREKTZUGRIFFSVERFAHREN UND ZUGEHÖRIGE VORRICHTUNG

PROCÉDÉ D'ACCÈS ALÉATOIRE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2018 CN 201810852639**

(43) Date of publication of application:
**05.05.2021 Bulletin 2021/18**

(73) Proprietor: **GUANGDONG OPPO MOBILE TELECOMMUNICATIONS CORP., LTD.**
**Dongguan Guangdong 523860 (CN)**

(72) Inventors:
• **SHI, Cong**
  **Dongguan, Guangdong 523860 (CN)**
• **WANG, Shukun**
  **Dongguan, Guangdong 523860 (CN)**
• **YANG, Ning**
  **Dongguan, Guangdong 523860 (CN)**
• **LU, Qianxi**
  **Dongguan, Guangdong 523860 (CN)**
• **YOU, Xin**
  **Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
**WO-A1-2018/075256    CN-A- 102 595 636**

• **CATT: "Consideration on 2-step RA", 3GPP DRAFT; R2-1700205 2-STEP RA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210789, Retrieved from the Internet: URL:http://www.3gpp.org/ftp/Meetings_3GPP_ SYNC/RAN2/Docs/ [retrieved on 2017-01-17]**
• **ERICSSON: "Random Access enhancements", 3GPP DRAFT; R2-166826 - RANDOM ACCESS ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung, Taiwan; 20161010 - 20161014 9 October 2016 (2016-10-09), XP051151278, Retrieved from the Internet: URL:http://www.3gpp.org/ftp/Meetings_3GPP_ SYNC/RAN2/Docs/ [retrieved on 2016-10-09]**

- "3rd Generation Partnership Project; Technical Specification Group Radio Access Network; Evolved Universal Terrestrial Radio Access (E-UTRA); Medium Access Control (MAC) protocol specification (Release 15)", 3GPP STANDARD; TECHNICAL SPECIFICATION; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.2.0, 6 July 2018 (2018-07-06), pages 1-126, XP051474829, [retrieved on 2018-07-06]
- CATT: "Consideration on 2-step RA, R2-1700205", 3GPP TSG RAN WG2 Meeting Ad Hoc, 7 January 2017 (2017-01-07), XP051203911,

**Description**

TECHNICAL FIELD

The disclosure relates to the technical field of information processing, and particularly to a random access method and a corresponding terminal device. The features of the preamble of the independent claims are known from CATT "Consideration on 2-step RA", 3GPP DRAFT; R2-1700205, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE, RAN WG2, Spokane, USA; 17 January 2017 (2017-01-17), XP051210789.

BACKGROUND

In New Radio (NR), two random access manners are mainly supported, i.e., a contention-based random access manner and a contention-free random access manner. At present, random access processes may include 4-step access and 2-step access. Therefore, a terminal device executing 2-step random access (RACH) and a terminal device executing 4-step RACH may coexist in a system, which results in confliction between the two coexisting terminal devices.

SUMMARY

The present invention is defined in the independent claims, and the preferable features according to the present invention are defined in the dependent claims.
According to the technical solutions of the examples of the disclosure, whether the random access response for the terminal device is received is determined through indication information in the random access response message sent to the terminal device by the network side, and a random access response type or a random access process type is indicated in the indication information. Therefore, it is ensured that the terminal device correctly receives the random access response consistent with random access process type in a system where multiple types of random access processes exist.

BRIEF DESCRIPTION OF THE DRAWINGS

FIG. 1 is a first architecture diagram of a communication system according to an example of the disclosure.

FIG. 2 is a flowchart of a random access method according to an example of the disclosure.

FIG. 3 to FIG. 6 are schematic diagrams of an information content of an RAR

FIG. 7 is a flowchart of random access processing.

FIG. 8 is a composition structure diagram of a terminal device according to an example of the disclosure.

FIG. 9 is a composition structure diagram of a communication device according to an example of the disclosure.

FIG. 10 is a schematic block diagram of a chip according to an example of the disclosure.

FIG. 11 is a second architecture diagram of a communication system according to an example of the disclosure.

DETAILED DESCRIPTION

The technical solutions in the examples of the disclosure are described below in combination with the drawings in the examples of the disclosure. Apparently, the described examples are only a part rather than all of the examples of the disclosure. All other examples obtained by those skilled in the art on the basis of the examples in the disclosure without paying creative work fall within the scope of protection of the disclosure.
The technical solutions of the examples of the disclosure may be applied to various communication systems such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system and a 5th-Generation (5G) system.

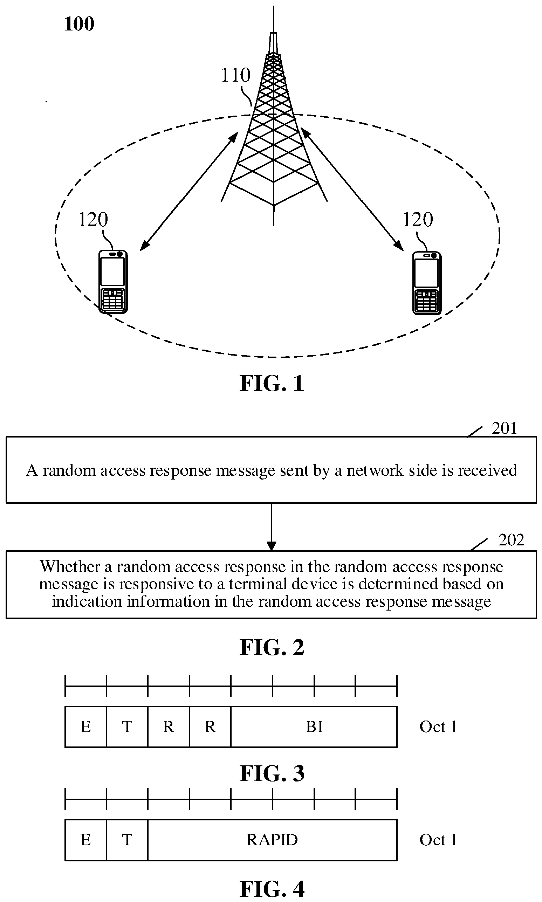

Exemplarily, a communication system 100 in the examples of the disclosure may be illustrated in FIG. 1 and may include a network device 110 which may be a device communicating with a terminal device 120 (a communication terminal or a terminal). The network device 110 may provide communication coverage for a particular geographical area and communicate with a terminal device located in the coverage. For example, the network device 110 may be a base station (a Base Transceiver Station (BTS)) in a GSM system or a CDMA system, a base station (a NodeB (NB)) in a WCDMA system, an evolutional base station (an Evolutional Node B (eNB or eNodeB)) in an LTE system, a wireless controller in a Cloud Radio Access Network (CRAN). Alternatively, the network device may be a mobile exchange center, a relay station, an access point, an on-board device, a wearable device, a hub, a switch, a bridge, a router, a network side device in a 5G network, a network device in a future evolutional Public Land Mobile Network (PLMN) or the like.

The communication system 100 further includes at least one terminal device 120 in the coverage of the network device 110. The terminal device used herein includes but is not limited to be connected via a wired line such as a Public Switched Telephone Network (PSTN), a Digital Subscriber Line (DSL), a digital cable, a direct cable, and/or via another data connection or network, and/or via a wireless interface such as a cellular network, a wireless local area network (WLAN), a digital television network like a Digital Video Broadcasting-Handheld (DVB-H) network, a satellite network, an Amplitude Modulation-Frequency Modulation (AM-FM) broadcasting transmitter, and/or via a device, which is configured to receive/send a communication signal, of another terminal device and/or an Internet of Things (IoT) device. The terminal device configured to communicate through the wireless interface may be referred to as "a wireless communication terminal", "a wireless terminal" or "a mobile "terminal". Examples of a mobile terminal include, but not limited to, a satellite or cellular telephone, a personal communication system (PCS) terminal capable of combining a cellular radio telephone and data processing, faxing and data communication capabilities, a personal digital assistant (PDA) capable of including a radio telephone, a pager, Internet/intranet access, a Web browser, a notepad, a calendar and/or a Global Positioning System (GPS) receiver, and a conventional laptop and/or palmtop receiver or another electronic device including a radio telephone transceiver. The terminal device may refer to an access terminal, User Equipment (UE), a user unit, a user station, a mobile station, a mobile radio station, a remote station, a remote terminal, a mobile device , a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device having a wireless communication function, a computing device, another processing device connected to a wireless modem, an on-board device, a wearable device, a terminal device in the 5G network, a terminal device in the future evolved PLMN or the like.

For example, Device to Device (D2D) communication may be performed between the terminal devices 120.

For example, the 5G system or the 5G network may also be called a New Radio (NR) system or an NR network.

One network device and two terminals are exemplarily shown in FIG. 1. For example, the communication system 100 may include multiple network devices, and each of the network devices may have other number of terminals in coverage thereof, which is not limited in the examples of the disclosure.

For example, the communication system 100 may further include another network entity such as a network controller and a mobility management entity, which is not limited in the examples of the disclosure.

It is to be understood that a device having a communication function in the network/system in the examples of the disclosure may be called a communication device. Taking the communication system 100 shown in FIG. 1 as an example, the communication device may include the network device 110 and terminal 120 having the communication function, and the network device 110 and the terminal 120 may be the specific devices mentioned above and will not be elaborated herein. The communication device may further include other devices in the communication system 100, for example, other network entities like a network controller and a mobility management entity, which is not limited in the examples of the disclosure.

It should be understood that the terms "system" and "network" are often used interchangeably herein. The term "and/or" herein only represent an association relationship of associated objects, which means that there may be three relationships. For example, A and/or B can mean: only A exists, both A and B exist, and only B exists. In addition, the character "/" herein generally indicates that there is an "or" relationship between two associated objects.

As shown in FIG. 2, the examples of the disclosure provide a random access method, which is applied to a terminal device and includes the following operations.

In 201, a random access response message sent by a network side is received.

In 202, whether a random access response in the random access response message is responsive to the terminal device is determined based on indication information in the random access response message.

The indication information at least indicates different types of random access responses or indicates different types of random access processes.

It should also be pointed out that different types of random access responses correspond to different types of random access processes.

The following scenarios are provided in the example: a first scenario in a first manner and a second manner, a second scenario and a third scenario.

First manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art, and is configured to indicate a random access process type or indicate different random access process responses. A specific processing manner is described as follows.

RAPIDs are grouped, and preambles are grouped. For example, there are a group A and a group B. If a UE selects a 2-step random access process, when a Message 1 (msgl) is sent, a random access preamble is selected from the group A. If the UE selects a 4-step random access process, when the msg1 is sent, the preamble is selected from the group B.

Second manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art and is configured to indicate a random access process type or indicate different random access process responses.

A difference of the second manner from the first manner is that, in the second manner, preambles are be grouped, and it is only defined that different Physical Random Access Channel (PRACH) resources are adopted for a 2-step random access process and a 4-step random access process.

Specifically, PRACH resources corresponding to the 2-step random access process and the 4-step random access process are grouped, but preambles of the PRACH resources are identical. Of course, it is also to be understood that the PRACHs are not grouped and it is only necessary to set that different types of random access processes correspond to different PRACH resources.

In such case, different types of RACH processes are distinguished through the preambles. This is because UEs adopting different RACH processes calculates different Random Access Radio Network Temporary Identities (RA-RNTIs) (the RA-RNTIs are calculated based on time-frequency positions of the PRACH resources) due to the grouping for the PRACH resources. Due to different RA-RNTIs, different RAR messages are obtained.

In the second scenario, a random access process type or a random access response type is indicated through second indication information.

Specifically, the indication information further includes the second indication information configured to indicate different types of random access processes or configured to indicate different types of random access responses.

A difference from the second scenario from the first scenario is that, in the second scenario, the RAPID in the first indication information does not indicate the random access process type or the random access response type. That is, the first indication information only includes an ordinary RAPID.

It is to be noted that the ordinary RAPID in the second scenario is different from the RAPID in the first scenario, and the ordinary RAPID in the second scenario refers to that the PRACH resources does not be distinguished for different types of random access processes, that is, the PRACH resources, i.e., PRACH time-domain resources and/or code resources, are shared resources.

The random access process type and the random access response type are indicated through the second indication information.

Third Scenario

In this scenario, the indication information includes only second indication information. In this case, the second indication information does include a RAPID and an indication for the random access process type and the random access response type. That is, in this scenario, no first indication information is included, and all information is indicated through the second indication information.

Based on the abovementioned scenario, the second indication information is described below.

The second indication information is an explicit indication manner.

For example, the second indication information is a first indication field in the random access response. The first indication field indicates the random access process type.

The second indication information is a second indication field in a Media Access Control (MAC) subheader corresponding to the random access response. The second indication information is an indication field in the MAC subheader corresponding to the random access response, and the indication field indicates the random access process type.

The second indication information is an implicit indication manner.

For example, the second indication information is a third indication field in the MAC subheader corresponding to the random access response, the third indication field is configured to indicate an random access response length, and different random access response lengths correspond to different types of random access processes, or different random access response lengths correspond to different types of random access responses.

A first random access response length corresponds to a 2-step random access process type, and a second random access response length corresponds to a 4-step random access process type.

That is, a domain in the MAC subheader corresponding to the random access response indicates the random access response length, and different lengths represent different random access processes.

For example, two random access response lengths are defined in the system: a length a corresponding to the 2-step random access process, and a length b corresponding to the 4-step random access process.

With respect to how to determine whether the random access response in the random access response message is responsive to the terminal device based on the above indication information, one of the following manners are used.

First Manner

When the indication information only includes the first indication information, if it is determined according to the RAPID in the first indication information that the random access process type is consistent with a random access process type selected by the terminal device, it is determined that the random access response in the random access response message is a response for the terminal device.

This manner corresponds to the above first scenario. In the first scenario, only the first indication information is included, and the random access process type indicated by the first indication information is determined through correspondences between the RAPIDs and different random access process types. This manner may correspond to both the first and second manners for the first scenario. Different RAPIDs correspond to different PRACH resources, that is, the PRACH resources may be grouped and different RAPIDs correspond to different PRACH resource groups. Furthermore, the PRACH resources of different groups also correspond to different RACH process types. Therefore, different random access process types are distinguished based on the RAPID in the first indication information.

Furthermore, it may be determined that the random access response in the random access response message is responsive to the terminal device only when the random access process type in the first indication information is the same as the random access process type selected by the terminal device.

It is also to be understood that the random access response message at least includes the indication information and the random access response.

Second Manner

When the indication information only includes the first indication information, if it is determined according to the RAPID in the first indication information that the random access response type corresponds to the random access process type selected by the terminal device, it is determined that the random access response in the random access response message is a response for the terminal device.

This manner corresponds to the above first scenario. In the first scenario, only the first indication information is included, and the random access process type indicated by the first indication information is determined through correspondences between the RAPIDs and different random access process types. This manner may correspond to both manners for the first scenario. Different RAPIDs correspond to different PRACH resources, that is, the PRACH resources may be grouped and different RAPIDs correspond to different PRACH resource groups. Furthermore, the PRACH resources of different groups also correspond to different random access process types. Therefore, different random access process types or different random access response types are distinguished based on the RAPIDs in the first indication information.

Furthermore, it may be determined that the random access response in the random access response message is responsive to the terminal device only when the random access response type in the first indication information corresponds to the random access process type selected by the terminal device.

Correspondences between different random access process types and different random access response types may be pre-configured by the system. The correspondences may be pre-configured to the terminal device by the network side, to ensure that configurations of the terminal device and the network side are identical.

It is also to be understood that the random access response message at least includes the indication information and the random access response.

Third Manner

When the RAPID in the first indication information is consistent with a RAPID sent by the terminal device, and the random access process type indicated by the second indication information is consistent with the random access process type selected by the terminal device, it is determined that the random access response in the random access response message is a response for the terminal device.

This manner corresponds to the above second scenario. That is, the RAPID in the first indication information is not configured to distinguish the random access process types and the random access response types, and is only configured to indicate a preamble Identifier (ID). In such case, it is determined that the random access response in the random access response message is responsive to the terminal device only when the RAPIDs are consistent and the random access process type in the second indication information is the same as the random access process type selected by the terminal device.

Fourth Manner

When the RAPID in the first indication information is consistent with a RAPID sent by the terminal device, and the random access response type indicated by the second indication information is consistent with the random access process type selected by the terminal device, it is determined that the random access response in the random access response message is a response for the terminal device.

This manner corresponds to the above second scenario. That is, the RAPID in the first indication information is not configured to distinguish the random access process types and the random access response types, and is only configured to indicate a preamble Identifier (ID). In such case, it is determined that the random access response in the random access response message is responsive to the terminal device only when the RAPIDs are consistent and the random access response type in the second indication information corresponds to the random access process type selected by the terminal device.

Fifth Manner

When the indication information only includes the second indication information, if the RAPID acquired from the second indication information is consistent with an RAPID sent by the terminal device and the random access process type indicated by the second indication information is consistent with the random access process type selected by the terminal device, it is determined that the random access response in the random access response message is a response for the terminal device.

This manner corresponds to the third scenario. That is, only the second indication information is sent, and random access process types or random access response types is not distinguished through the RAPIDs. In such case, it is determined whether the random access response is responsive to the terminal device when it is determined that the RAPID is the same as the random access preamble, and the random access process type is the same as that selected by the terminal.

Sixth Manner

When the indication information only includes the second indication information, the RAPID acquired from the second indication information is consistent with the RAPID sent by the terminal device and the random access response type indicated by the second indication information corresponds to the random access process type selected by the terminal device, it is determined that the random access response in the random access response message is a response for the terminal device.

This manner corresponds to the third scenario. That is, only the second indication information is sent, and the random access process types or random access response types is not distinguished through the RAPIDs. In such case, it is determined whether the random access response is responsive to the terminal device when it is determined that the RAPID is the same as the random access preamble, and the random access response type corresponds to the random access process type selected by the terminal.

The random access preamble is sent by the terminal device on a pre-configured random access resource, and selected by the terminal device from at least two random access preambles.

The random access process type includes one of the 2-step random access process and the 4-step random access process.

The 4-step random access process includes the following specific steps 1 to 4.

In step 1, the terminal selects a PRACH resource (a time-frequency resource and a code-domain resource).

The terminal sends a selected preamble on the selected PRACH time-frequency resource. A base station may estimate Uplink (UL) timing and a grant size required for transmitting a Message 3 (msg3) by the terminal based on the preamble.

In step 2, the network sends an RAR to the terminal.

The terminal, after sending a first message (msgl), starts an RAR window and monitors a PDCCH in the window. The PDCCH is a PDCCH scrambled by an RA-RNTI. The RA-RNTI is calculated as follows:

$$RA\text{-}RNTI = 1 + s\_id + 14 \times t\_id + 14 \times 80 \times f\_id + 14 \times 80 \times 8 \times ul\_carrier\_id.$$

That is, the RA-RNTI is related to the PRACH time-frequency resource selected by the UE.

After the PDCCH scrambled by the RA-RNTI is successfully monitored, the terminal may obtain a Physical Downlink Shared Channel (PDSCH), scheduled by the PDCCH, in which the RAR is included. A format of the RAR is shown in FIG. 3 to 6. A subheader of the RAR includes: a Back Indicator (BI) configured to indicate back-off time for retransmission of the msgl; and a RAPID configured to indicate a preamble index received by the network. A payload of the RAR includes a Tracking Area Code (TAC) configured to regulate the UL timing, a UL grant configured to indicate an uplink resource scheduling a third message and a Temporary Cell Radio Network Temporary Identity (C-RNTI) (TC-RNTI) configured to scramble a PDCCH for a fourth message 4 (initial access).

In step 3, the terminal transmits an RRC message on the scheduled resource.

The msg3 is mainly configured to notify the network of an event which triggers the RACH process. For example, in an initial RACH process, the msg3 may carry a UE ID and an establishment cause. In Radio Resource Control (RRC) reestablishment, the msg3 may carry a connected-state UE ID and an establishment cause.

In addition, a contention conflict for the ID carried in the msg3 is resolved in step 4.

In step 4, the contention conflict is resolved.

The msg4 has two functions: one is to solve the contention conflict, and the other is to transmit an RRC configuration message to the terminal.

Specifically, the contention conflict is resolved in the following manners.

In a first manner, if the UE carries a C-RNTI in step 3, the fourth message is scheduled by the PDCCH scrambled by the C-RNTI.

In a second manner, if the UE does not carry the C-RNTI in step 3, for example, in initial access, the fourth message is scheduled by the PDCCH scrambled by the TC-RNTI. The conflict is resolved in a manner that the UE receives the PDSCH for the fourth message and matches a Common Control Channel (CCCH) Service Data Unit (SDU) in the PDSCH.

The message contents carried in each message for 4-step RACH are shown in the following table.

|  | Msg1 | Msg2 | Msg3 | Msg4 |
|---|---|---|---|---|
| Initial access | Random access preamble | RAR-RNTI addressed PDCCH; PDSCH; BI (optional); RAPID; TA; UL grant; TC-RNTI | UE ID (48bit 5G-S-TMSI); Establishment cause (4bit) | TC-RNTI addressed PDCCH; CCCH SDU in the PDSCH scheduled by the PDCCH |
| RRC reestablishment |  |  | Reestablishment UE ID; C-RNTI; PCI (of the primary cell); Short MAC I; Reestablishment cause | C-RNTI addressed PDCCH; CCCH SDU in the PDSCH scheduled by the PDCCH |
| Handover |  |  | N/A* | N/A* |
| RRC resume |  |  | Resume ID Short MAC I RRC resume cause | C-RNTI addressed PDCCH; CCCH SDU in the PDSCH scheduled by the PDCCH |

(continued)

|  | Msg1 | Msg2 | Msg3 | Msg4 |
| --- | --- | --- | --- | --- |
| SI request |  | RA-RNTI addressed PDCCH; RAR only includes RAPID | N/A | N/A |
| BFR |  | C-RNTI addressed PDCCH | N/A | N/A |

In the 2-step random access process, msg1+msg3 in 4-step RACH may be transmitted in msg1+, and msg2+msg4 in 4-step RACH may be transmitted in msg2+.

The terminal device initiates different random access processes on different random access resources.

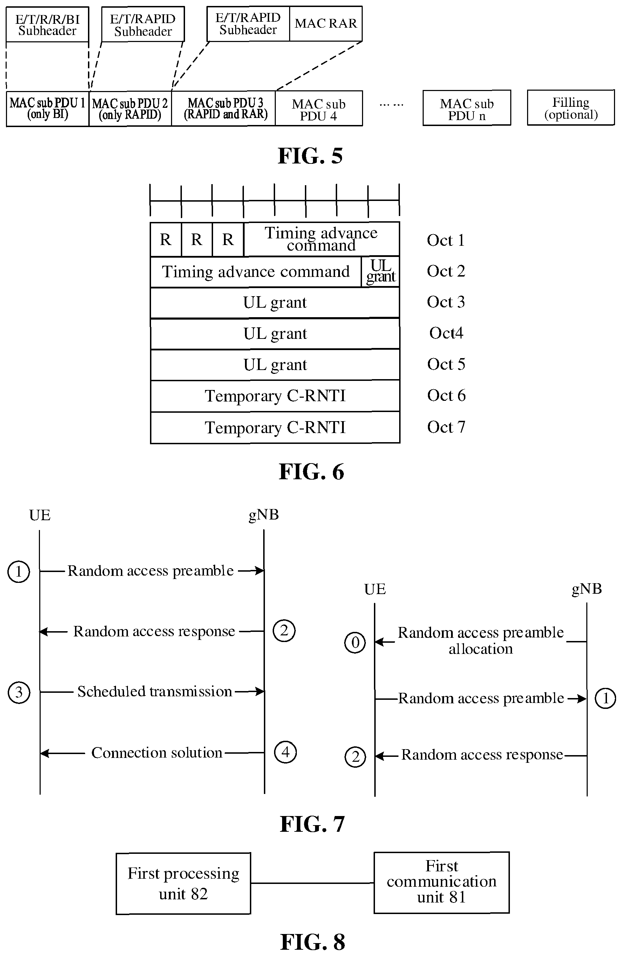

In NR, two random access manners are mainly supported, i.e., a contention-based random access manner and a contention-free random access manner, as shown in FIG. 7.

The random access process may be triggered by the following events: initial access in an RRC idle state; an RRC connection re-establishment procedure; handover; UL or downlink data arrival in an RRC connected state when a UL synchronization state is a non-synchronized state; transmission in an RRC non-activated state; and a request for other System Information (SI).

The random access resources have correspondences with random access process types.

The random access resources include a time-frequency resource and/or a random access preamble.

It can be seen that, with the above solution, whether the random access response for the terminal device is received is determined through the indication information in the random access response message sent to the terminal device by the network side. A random access type or a random access process type is indicated in the indication information. Therefore, it is ensured that the terminal device can correctly receive the random access response conforming to a random access process type of the terminal device in a system where multiple types of random access processes exist.

The examples of the disclosure provide a random access method, which is applied to a network device and includes the following operation.

A random access response message is sent to a terminal device.

The random access response message includes indication information, and the indication information at least indicates different types of random access responses or indicates different types of random access processes.

It should also be pointed out that different types of random access responses correspond to different types of random access processes.

The following scenarios may be provided in the example: a first scenario in a first manner and a second manner, a second scenario and a third scenario.

First manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art, and is configured to indicate a random access process type or indicate different random access process responses. A specific processing manner is described as follows.

RAPIDs are grouped, and preambles are grouped. For example, there may be a group A and a group B. If a UE selects a 2-step random access process, when a Message 1 (msgl) is sent, a random access preamble is selected from the group A. If the UE selects a 4-step random access process, when the msgl is sent, the preamble is selected from the group B.

Second manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art and is configured to indicate a random access process type or indicate different random access process responses.

A difference of the second manner from the first manner is that, in the second manner, preambles may not be grouped, and it is only defined that different Physical Random Access Channel (PRACH) resources are adopted for the 2-step random access process and the 4-step random access process.

Specifically, PRACH resources corresponding to the 2-step random access process and the 4-step random access process may be grouped, but preambles of the PRACH resources may be identical. Of course, it is also to be understood that the PRACHs may not be grouped and it is only necessary to set that different types of random access processes correspond to different PRACH resources.

In such case, different types of RACH processes may be distinguished through the preambles. This is because UEs adopting different RACH processes may calculate different Random Access Radio Network Temporary Identities (RA-RNTIs) (the RA-RNTIs are calculated based on time-frequency positions of the PRACH resources) due to the grouping for the PRACH resources. Due to different RA-RNTIs, different RAR messages may be obtained.

In the second scenario, a random access process type or a random access response type is indicated through second indication information.

Specifically, the indication information further includes the second indication information configured to indicate different types of random access processes or configured to indicate different types of random access responses.

A difference from the second scenario from the first scenario is that, in the second scenario, the RAPID in the first indication information may not indicate the random access process type or the random access response type. That is, the first indication information only includes an ordinary RAPID.

It is to be noted that the ordinary RAPID in the second scenario is different from the RAPID in the first scenario, and the ordinary RAPID in the second scenario refers to that the PRACH resources may not be distinguished for different types of random access processes, that is, the PRACH resources, i.e., PRACH time-domain resources and/or code resources, are shared resources.

Third scenario

In this scenario, the indication information includes only second indication information. In this case, the second indication information includes a RAPID and an indication for the random access process type and the random access response type. That is, in this scenario, the first indication information is not included, and all information is indicated through the second indication information.

Based on the abovementioned scenario, the second indication information is described below.

The second indication information may be an explicit indication manner.

For example, the second indication information may be a first indication field in the random access response. The first indication field may indicate the random access process type.

The second indication information may be a second indication field in a Media Access Control (MAC) subheader corresponding to the random access response. The second indication information is an indication field in the MAC subheader corresponding to the random access response, and the indication field may indicate the random access process type.

The second indication information may be an implicit indication manner.

For example, the second indication information is a third indication field in the MAC subheader corresponding to the random access response, the third indication field is configured to indicate an random access response length, and different random access response lengths correspond to different types of random access processes, or different random access response lengths correspond to different types of random access responses.

A first random access response length corresponds to a 2-step random access process type, and a second random access response length corresponds to a 4-step random access process type.

That is, a domain in the MAC subheader corresponding to the random access response indicates the random access response length, and different lengths represent different random access processes.

For example, two random access response lengths may be defined in the system: a length a corresponding to the 2-step random access process, and a length b corresponding to the 4-step random access process.

The network side may further receive different random access processes initiated by the terminal device on different random access resources.

The random access resources have correspondences a random access process types.

The random access resources include a time-frequency resource and/or a random access preamble.

It can be seen that, with the above solution, whether a random access response for the terminal device is received or not may be determined through the indication information in the random access response message sent to the terminal device by the network side, and a random access response type or a random access process type may be indicated in the indication information. Therefore, it is ensured that the terminal device can correctly receive the random access response conforming to a random access process type of the terminal device in a system where multiple types of random access processes exist.

As shown in FIG. 8, the examples of the disclosure provide a terminal device, which includes a first communication unit 81 and a first processing unit 82.

The first communication unit 81 is configured to receive a random access response message sent by a network side.

The first processing unit 82 is configured to determine whether a random access response in the random access response message is responsive to the terminal device based on indication information in the random access response message.

The indication information at least indicates different types of random access responses or indicate different types of random access processes.

It should also be pointed out that different types of random access responses correspond to different types of random access processes.

The following scenarios are provided in the example: a first scenario in a first manner and a second manner, a second scenario and a third scenario.

First manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art, and is configured to indicate a random access process type or indicate different random access process responses. A specific processing manner is described as follows.

RAPIDs are grouped, and preambles are grouped. For example, there are a group A and a group B. If a UE selects a 2-step random access process, when a Message 1 (msgl) is sent, a random access preamble is selected from the group A. If the UE selects a 4-step random access process, when the msgl is sent, the preamble is selected from the group B.

Second manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art and is configured to indicate a random access process type or indicate different random access process responses.

A difference of the second manner from the first manner is that, in the second manner, preambles are not grouped, and it is only defined that different Physical Random Access Channel (PRACH) resources are adopted for a 2-step random access process and a 4-step random access process.

Specifically, PRACH resources corresponding to the 2-step random access process and the 4-step random access process are grouped, but preambles of the PRACH resources are identical. Of course, it is also to be understood that the PRACHs are not grouped and it is only necessary to set that different types of random access processes correspond to different PRACH resources.

In such case, different types of RACH processes are distinguished through the preambles. This is because UEs adopting different RACH processes calculates different Random Access Radio Network Temporary Identities (RA-RNTIs) (the RA-RNTIs are calculated based on time-frequency positions of the PRACH resources) due to the grouping for the PRACH resources. Due to different RA-RNTIs, different RAR messages are obtained.

In the second scenario, a random access process type or a random access response type is indicated through second indication information.

Specifically, the indication information further includes the second indication information configured to indicate different types of random access processes or configured to indicate different types of random access responses.

A difference from the second scenario from the first scenario is that, in the second scenario, the RAPID in the first indication information does not indicate the random access process type or the random access response type. That is, the first indication information only includes an ordinary RAPID.

It is to be noted that the ordinary RAPID in the second scenario is different from the RAPID in the first scenario, and the ordinary RAPID in the second scenario refers to that the PRACH resources are not distinguished for different types of random access processes, that is, the PRACH resources, i.e., PRACH time-domain resources and/or code resources, are shared resources.

Third Scenario

In this scenario, the indication information includes only second indication information. In this case, the second indication information includes a RAPID and an indication for the random access process type and the random access response type. That is, in this scenario, the first indication information is not included, and all information is indicated through the second indication information.

Based on the abovementioned scenario, the second indication information is described below.

The second indication information is an explicit indication manner.

For example, the second indication information is a first indication field in the random access response. The first indication field indicates the random access process type.

The second indication information is a second indication field in a Media Access Control (MAC) subheader corresponding to the random access response. The second indication information is an indication field in the MAC subheader corresponding to the random access response, and the indication field indicates the random access process type.

The second indication information is an implicit indication manner.

For example, the second indication information is a third indication field in the MAC subheader corresponding to the random access response, the third indication field is configured to indicate an random access response length, and different random access response lengths correspond to different types of random access processes, or different random access response lengths correspond to different types of random access responses.

A first random access response length corresponds to a 2-step random access process type, and a second random access response length corresponds to a 4-step random access process type.

That is, a domain in the MAC subheader corresponding to the random access response indicates the random access response length, and different lengths represent different random access processes.

For example, two random access response lengths is defined in the system: a length a corresponding to the 2-step random access process, and a length b corresponding to the 4-step random access process.

With respect to how the first processing unit 82 determines whether the random access response in the random access response message is responsive to the terminal device based on the above indication information, one of the following manners may be used.

First Manner

When the indication information only includes the first indication information, if it is determined according to the RAPID in the first indication information that the random access process type is consistent with a random access process type selected by the terminal device, it is determined that the random access response in the random access response message is a response for the terminal device.

This manner corresponds to the above first scenario. In the first scenario, only the first indication information is included, and the random access process type indicated by the first indication information is determined through correspondences between the RAPIDs and different random access process types. This manner may correspond to both the first and second manners for the first scenario. Different RAPIDs correspond to different PRACH resources, that is, the PRACH resources may be grouped and different RAPIDs correspond to different PRACH resource groups. Furthermore, the PRACH resources of different groups also correspond to different random access process types. Therefore, different random access process types are distinguished based on the RAPID in the first indication information.

Furthermore, it may be determined that the random access response in the random access response message is responsive to the terminal device only when the random access process type in the first indication information is the same as the random access process type selected by the terminal device.

It is also to be understood that the random access response message may at least include the indication information and the random access response.

Second Manner

When the indication information only includes the first indication information, if it is determined according to the RAPID in the first indication information that the random access response type corresponds to the random access process type selected by the terminal device, it is determined that the random access response in the random access response message is a response for the terminal device.

This manner corresponds to the above first scenario. In the first scenario, only the first indication information is included, and the random access process type indicated by the first indication information is determined through correspondences between the RAPIDs and different random access process types. This manner may correspond to both manners for the first scenario. Different RAPIDs correspond to different PRACH resources, that is, the PRACH resources may be grouped and different RAPIDs correspond to different PRACH resource groups. Furthermore, the PRACH resources of different groups also correspond to different random access process types. Therefore, different random access process types or different random access response types are distinguished based on the RAPIDs in the first indication information.

Furthermore, it may be determined that the random access response in the random access response message is responsive to the terminal device only when the random access response type in the first indication information corresponds to the random access process type selected by the terminal device.

Correspondences between different random access process types and different random access response types may be pre-configured by the system. The correspondences may be pre-configured to the terminal device by the network side, to ensure that configurations of the terminal device and the network side are identical.

It is also to be understood that the random access response message may at least include the indication information and the random access response.

Third Manner

When the RAPID in the first indication information is consistent with a RAPID sent by the terminal device, and the random access process type indicated by the second indication information is consistent with the random access process type selected by the terminal device, it is determined that the random access response in the random access response message is a response for the terminal device.

This manner corresponds to the above second scenario. That is, the RAPID in the first indication information is not configured to distinguish the random access process types and the random access response types, and is only configured to indicate a preamble Identifier (ID). In such case, it is determined that the random access response in the random access response message is responsive to the terminal device only when the RAPIDs are consistent and the random access process type in the second indication information is the same as the random access process type selected by the terminal device.

Fourth Manner

When the RAPID in the first indication information is consistent with a RAPID sent by the terminal device, and the random access response type indicated by the second indication information is consistent with the random access process type selected by the terminal device, it is determined that the random access response in the random access response message is a response for the terminal device.

This manner corresponds to the above second scenario. That is, the RAPID in the first indication information is not configured to distinguish the random access process types and the random access response types, and is only configured to indicate a preamble Identifier (ID). In such case, it is determined that the random access response in the random access response message is responsive to the terminal device only when the RAPIDs are consistent and the random access response type in the second indication information corresponds to the random access process type selected by the terminal device.

Fifth Manner

When the indication information only includes the second indication information, if the RAPID acquired from the second indication information is consistent with an RAPID sent by the terminal device and the random access process type indicated by the second indication information is consistent with the random access process type selected by the terminal device, it is determined that the random access response in the random access response message is a response for the terminal device.

This manner corresponds to the third scenario. That is, only the second indication information is sent, and random access process types or random access response types is not distinguished through the RAPIDs. In such case, it is determined whether the random access response is responsive to the terminal device when it is determined that the RAPID is the same as the random access preamble, and the random access process type is the same as that selected by the terminal.

Sixth Manner

When the indication information only includes the second indication information, the RAPID acquired from the second indication information is consistent with the RAPID sent by the terminal device and the random access response type indicated by the second indication information corresponds to the random access process type selected by the terminal device, it is determined that the random access response in the random access response message is a response for the terminal device.

This manner corresponds to the third scenario. That is, only the second indication information is sent, and the random access process types or the random access response types is not distinguished through the RAPIDs. In such case, it is determined whether the random access response is responsive to the terminal device when it is determined that the RAPID is the same as the random access preamble, and the random access response type corresponds to the random access process type selected by the terminal.

The random access preamble is sent by the terminal device on a pre-configured random access resource, and selected by the terminal device from at least two random access preambles.

The random access process type includes one of the 2-step random access process and the 4-step random access process.

The terminal device initiates different random access processes on different random access resources.

In NR, two random access manners are supported, i.e., a contention-based random access manner and a contention-free random access manner, as shown in FIG. 7.

The random access process may be triggered by the following events: initial access in an RRC idle state; an RRC connection re-establishment procedure; handover; UL or downlink data arrival in an RRC connected state when a UL synchronization state is a non-synchronized state; transmission in an RRC non-activated state; and a request for other System Information (SI).

The random access resources have correspondences with random access process types.

The random access resources include a time-frequency resource and/or a random access preamble.

It can be seen that, with the above solution, whether the random access response for the terminal device is received is determined through the indication information in the random access response message sent to the terminal device by the network side. A random access type or a random access process type is indicated in the indication information. Therefore, it is ensured that the terminal device can correctly receive the random access response conforming to a random access process type of the terminal device in a system where multiple types of random access processes exist.

The examples of the disclosure provide a network device, which includes a second communication unit.

The second communication unit is configured to send a random access response message to a terminal device.

The random access response message includes indication information, and the indication information at least indicates different types of random access responses or indicates different types of random access processes.

It should also be pointed out that different types of random access responses correspond to different types of random access processes.

The following scenarios may be provided in the example: a first scenario in a first manner and a second manner, a second scenario and a third scenario.

First manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art, and is configured to indicate a random access process type or indicate different random access process responses. A specific processing manner is described as follows.

RAPIDs are grouped, and preambles are grouped. For example, there may be a group A and a group B. If a UE selects a 2-step random access process, when a Message 1 (msgl) is sent, a random access preamble is selected from the group A. If the UE selects a 4-step random access process, when the msgl is sent, the preamble is selected from the group B.

Second manner of the first scenario

Regarding a condition that the indication information only includes first indication information, reference is made to the following descriptions.

The indication information includes the first indication information that is a Random Access Preamble Identifier (RAPID) in the random access response message. The RAPID is configured to indicate different types of random access processes or configured to indicate different types of random access responses.

In the scenario, the RAPID is different from an RAPID defined in the conventional art and is configured to indicate a random access process type or indicate different random access process responses.

A difference of the second manner from the first manner is that, in the second manner, preambles may not be grouped, and it is only defined that different Physical Random Access Channel (PRACH) resources are adopted for a 2-step random access process and a 4-step random access process.

Specifically, PRACH resources corresponding to the 2-step random access process and the 4-step random access process may be grouped, but preambles of the PRACH resources may be identical. Of course, it is also to be understood that the PRACHs may not be grouped and it is only necessary to set that different types of random access processes correspond to different PRACH resources.

In such case, different types of RACH processes may be distinguished through the preambles. This is because UEs adopting different RACH processes may calculate different Random Access Radio Network Temporary Identities (RA-RNTIs) (the RA-RNTIs are calculated based on time-frequency positions of the PRACH resources) due to the grouping for the PRACH resources. Due to different RA-RNTIs, different RAR messages may be obtained.

In the second scenario, a random access process type or a random access response type is indicated through second indication information.

Specifically, the indication information further includes the second indication information configured to indicate different types of random access processes or configured to indicate different types of random access responses.

A difference from the second scenario from the first scenario is that, in the second scenario, the RAPID in the first indication information may not indicate the random access process type or the random access response type. That is, the first indication information only includes an ordinary RAPID.

It is to be noted that the ordinary RAPID in the second scenario is different from the RAPID in the first scenario, and the ordinary RAPID in the second scenario refers to that the PRACH resources may not be distinguished for different types of random access processes, that is, the PRACH resources, i.e., PRACH time-domain resources and/or code resources, are shared resources.

Third Scenario

In this scenario, the indication information includes only second indication information. In this case, the second indication information may include a RAPID and an indication for the random access process type and the random access response type. That is, in this scenario, no first indication information may be included, and all information is indicated through the second indication information.

Based on the abovementioned scenario, the second indication information is described below.

The second indication information may be an explicit indication manner.

For example, the second indication information may be a first indication field in the random access response. The first indication field may indicate the random access process type.

The second indication information may be a second indication field in a Media Access Control (MAC) subheader corresponding to the random access response. The second indication information is an indication field in the MAC subheader corresponding to the random access response, and the indication field may indicate the random access process type.

The second indication information may be an implicit indication manner.

For example, the second indication information is a third indication field in the MAC subheader corresponding to the random access response, the third indication field is configured to indicate an random access response length, and different random access response lengths correspond to different types of random access processes, or different random access response lengths correspond to different types of random access responses.

A first random access response length corresponds to a 2-step random access process type, and a second random access response length corresponds to a 4-step random access process type.

That is, a domain in the MAC subheader corresponding to the random access response indicates the random access response length, and different lengths represent different random access processes.

For example, two random access response lengths may be defined in the system: a length a corresponding to the 2-step random access process, and a length b corresponding to the 4-step random access process.

The second communication unit is configured to receive different random access processes initiated by the terminal device on different random access resources.

The random access resources have correspondences with random access process types.

The random access resources include a time-frequency resource and/or a random access preamble.

It can be seen that, with the above solution, whether a random access response for the terminal device is received may be determined through the indication information in the random access response message sent to the terminal device by the network side, and a random access response type or a random access process type may be indicated in the indication information. Therefore, it is ensured that the terminal device can correctly receive the random access response conforming to a random access process type of the terminal device in a system where multiple types of random access processes exist

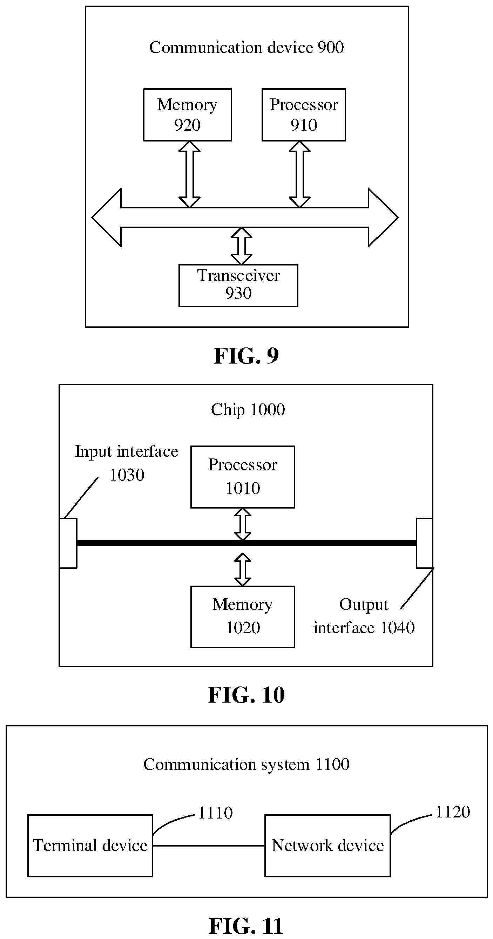

FIG. 9 is a schematic structural diagram of a communication device 900 according to an example of the disclosure. The communication device 900 shown in FIG. 9 includes a processor 910, and the processor 910 may call and run a computer program in a memory to implement the method in the examples of the disclosure.

For example, as shown in FIG. 9, the communication device 900 may further include a memory 920. The processor 910 may call and run the computer program in the memory 920 to implement the method in the examples of the disclosure.

The memory 920 may be a separate device independent of the processor 910 and may also be integrated into the processor 910.

For example, as shown in FIG. 9, the communication device 900 may further include a transceiver 930, and the processor 910 may control the transceiver 930 to communicate with another device, specifically sending information or data to another device or receiving information or data sent by the another device.

The transceiver 930 may include a transmitter and a receiver. The transceiver 930 may further include an antenna, and the number of the antennas may be one or more.

For example, the communication device 900 may be a network device of the example of the disclosure, and the communication device 900 may implement corresponding flows implemented by the network device in each method of the examples of the disclosure. For simplicity, elaborations are omitted herein.

For example, the communication device 900 may be a terminal device or network device of the example of the disclosure, and the communication device 900 may implement corresponding flows implemented by the mobile terminal/terminal device in each method of the examples of the disclosure. For simplicity, elaborations are omitted herein.

FIG. 10 is a schematic structural diagram of a chip according to a not-claimed example of the disclosure. The chip 1000 shown in FIG. 10 includes a processor 1010, and the processor 1010 may call and run a computer program in a memory to implement the method in the examples of the disclosure.

For example, as shown in FIG. 10, the chip 1000 may further include the memory 1020. The processor 1010 may call and run the computer program in the memory 1020 to implement the method in the examples of the disclosure.

The memory 1020 may be a separate device independent of the processor 1010 and may also be integrated into the processor 1010.

For example, the chip 1000 may further include an input interface 1030. The processor 1010 may control the input interface 1030 to communicate with another device or chip, specifically acquiring information or data sent by the another device or chip.

For example, the chip 1000 may further include an output interface 1040. The processor 1010 may control the output interface 1040 to communicate with another device or chip, specifically outputting information or data sent by the other device or chip.

For example, the chip may be applied to the network device of the examples of the disclosure, and the chip may implement corresponding flows implemented by the network device in each method of the examples of the disclosure. For simplicity, elaborations are omitted herein.

For example, the chip may be applied to the terminal device of the examples of the disclosure, and the chip may implement corresponding flows implemented by the terminal device in each method of the examples of the disclosure. For simplicity, elaborations are omitted herein.

It is to be understood that the chip mentioned in the example of the disclosure may also be called a system-level chip, a system chip, a chip system or a system on chip, etc.

FIG. 11 is a schematic block diagram of a communication system 1100 according to a not-claimed example of the disclosure. As shown in FIG. 11, a communication system 1100 includes a terminal device 1110 and a network device 1120.

The terminal device 1110 may be configured to realize corresponding functions realized by the terminal device in the above method, and the network device 1120 may be configured to realize corresponding functions realized by the network device in the above method. For simplicity, elaborations are omitted herein.

It is to be understood that the processor in the example of the disclosure may be an integrated circuit chip and has a signal processing capability. In an implementation process, each step of the above method examples may be implemented by an integrated logical circuit of hardware in the processor or an instruction in a software form. The above processor may be a universal processor, a Digital Signal Processor (DSP), an Application Specific Integrated Circuit (ASIC), a Field Programmable Gate Array (FPGA) or another programmable logical device, a discrete gate or a transistor logical device and a discrete hardware component. Each method, operation and logical block diagram disclosed in the examples of the disclosure may be implemented or executed. The universal processor may be a microprocessor or the processor may also be any conventional processor and the like. The operations of the method disclosed in combination with the examples of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and implements the steps of the method in combination with hardware.

It can be understood that the memory in the example of the disclosure may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It is to be noted that the memory of a system and method described in the disclosure is intended to include, but not limited to, memories of these and any other proper types.

It is to be understood that the above memory is exemplarily but unlimitedly described. For example, the memory in the examples of the disclosure may also be an SRAM, a DRAM, an SDRAM, a DDR SDRAM, an ESDRAM, an SLDRAM and a DR RAM. That is, the memory in the examples of the disclosure is intended to include, but not limited to, memories of these and any other proper types.

The examples of the disclosure also provide a computer-readable storage medium, not claimed, which is configured to store a computer program.

For example, the computer-readable storage medium may be applied to a network device in the examples of the disclosure, and the computer program enables a computer to execute corresponding flows implemented by the network device in each method of the examples of the disclosure. For simplicity, elaborations are omitted herein.

For example, the computer-readable storage medium may be applied to a mobile terminal/terminal device in the examples of the disclosure, and the computer program enables a computer to execute corresponding flows implemented by a mobile terminal/ the terminal device in each method of the examples of the disclosure. For simplicity, elaborations are omitted herein.

The examples of the disclosure further provide a computer program product, not claimed, which includes a computer program instruction.

For example, the computer program product may be applied to a network device in the examples of the disclosure, and the computer program instruction enables a computer to execute corresponding flows implemented by the network device in each method of the examples of the disclosure. For simplicity, elaborations are omitted herein.

For example, the computer program product may be applied to a mobile terminal/terminal device in the examples of the disclosure, and the computer program instruction enables the computer to execute corresponding flows implemented by the mobile terminal/terminal device in each method of the examples of the disclosure. For simplicity, elaborations are omitted herein.

The examples of the disclosure further provide a computer program, not claimed. .

For example, the computer program may be applied to a network device in the examples of the disclosure, and the computer program runs in a computer to enable the computer to execute corresponding flows implemented by the network device in each method of the examples of the disclosure. For simplicity, elaborations are omitted herein.

For example, the computer program may be applied to a mobile terminal/terminal device in the examples of the disclosure, and the computer program runs in the computer to enable the computer to execute corresponding flows implemented by the mobile terminal/terminal device in each method of the examples of the disclosure. For simplicity, elaborations are omitted herein.

Those of ordinary skill in the art may realize that the units and algorithm steps of each example described in combination with the examples disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that regarding specific operation processes of the system, device and unit described above, reference may be made to the corresponding processes in the above method example, and elaborations are omitted herein for convenient and brief description.

In some examples provided by the disclosure, it is to be understood that the disclosed system, device and method may be implemented in another manner. For example, the device example described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection implemented through some interfaces, the device or the units, and may be electrical and mechanical or in other forms.

The units described as separate parts may or may not be physically separated, and parts displayed as units may or may not be physical units, and namely may be located in the same place, or may also be distributed to multiple network units. A part or all of the units may be selected to achieve the purpose of the solutions of the examples according to a practical requirement.

In addition, each functional unit in each example of the disclosure may be integrated into a processing unit, each unit may also physically exist independently, and two or more than two units may also be integrated into a unit.

When being implemented in form of software functional unit and sold or used as an independent product, the function may also be stored in a computer-readable storage medium. Based on such an understanding, an essential part of the technical solutions in the disclosure, a part of the technical solutions making contributions to the prior art, or a part of the technical solutions may be embodied in a form of a software product. The computer software product is stored in a storage medium and includes several instructions configured to enable a computer device (which may be a personal computer, a server, a network device or the like) to execute all or a part of the operations of the method in each example of the disclosure. The above-mentioned storage medium includes: various media capable of storing program codes such as a U disk, a mobile hard disk, a Read-Only Memory (ROM), a Random Access Memory (RAM), a magnetic disk and an optical disk.

## Claims

1. A method for random access, applied to a terminal device, the method comprises:

   receiving (201) a random access response message sent by a network side; and
   determining (202) whether a random access response in the random access response message is responsive to the terminal device based on indication information in the random access response message,
   wherein the indication information is able to at least indicate different types of random access responses, and the indication information comprises second indication information configured to indicate different types of random access responses;
   **characterized in that**,
   when the indication information only comprises the second indication information, a random access preamble identifier, RAPID, acquired from the second indication information is consistent with the RAPID sent by the terminal device and the random access process type indicated by the second indication information is consistent with the random access process type selected by the terminal device, determining that the random access response in the random access response message is a response for the terminal device;
   or,
   when the indication information only comprises the second indication information, the RAPID acquired from the second indication information is consistent with the RAPID sent by the terminal device and the random access response type indicated by the second indication information corresponds to the random access process type selected by the terminal device, determining that the random access response in the random access response message is a response for the terminal device.

2. The method of claim 1, wherein the second indication information is a first indication field in the random access response.

3. The method of claim 1, wherein the second indication information is a second indication field in a Media Access Control, MAC, subheader corresponding to the random access response.

4. The method of claim 1, wherein the second indication information is a third indication field in a Media Access Control, MAC, subheader corresponding to the random access response, and
   the third indication field is configured to indicate an random access response length, different random access response lengths corresponding to different types of random access processes, or different random access response lengths corresponding to different types of random access responses.

5. The method of claim 4, wherein a first random access response length corresponds to a 2-step random access process type, and a second random access response length corresponds to a 4-step random access process type.

6. The method of claim 1, wherein a random access preamble is sent by the terminal device on a pre-configured random access resource and is selected by the terminal device from at least two random access preambles.

7. The method of any one of claims 1 to 6, further comprising:
initiating, by the terminal device, different random access processes on different random access resources.

8. The method of claim 7, wherein the random access resources have correspondences with the random access process types, and
the random access resources comprise at least one of a time-frequency resource or a random access preamble.

9. A terminal device, comprising:

a first communication unit (82), configured to receive a random access response message sent by a network side; and
a first processing unit (81), configured to determine whether a random access response in the random access response message is responsive to the terminal device based on indication information in the random access response message,
wherein the indication information is able to at least indicate different types of random access responses, and the indication information further comprises second indication information configured to indicate different types of random access responses;
**characterized in that**,
when the indication information only comprises the second indication information, a random access preamble identifier, RAPID, acquired from the second indication information is consistent with the RAPID sent by the terminal device and the random access process type indicated by the second indication information is consistent with the random access process type selected by the terminal device, the first processing unit is configured to determine that the random access response in the random access response message is a response for the terminal device;
or,
when the indication information only comprises the second indication information, the RAPID acquired from the second indication information is consistent with the RAPID sent by the terminal device and the random access response type indicated by the second indication information corresponds to the random access process type selected by the terminal device, the first processing unit is configured to determine that the random access response in the random access response message is a response for the terminal device.

10. The terminal device of claim 9, wherein the second indication information is a first indication field in the random access response.

**Patentansprüche**

1. Direktzugriffsverfahren, das auf eine Endgerätevorrichtung angewendet wird, wobei das Verfahren umfasst:

Empfangen (201) einer Direktzugriffsantwortnachricht, die von einer Netzwerkseite gesendet wird; und
Bestimmen (202), ob eine Direktzugriffsantwort in der Direktzugriffsantwortnachricht eine Antwort an die Endgerätevorrichtung ist, basierend auf Anzeigeinformationen in der Direktzugriffsantwortnachricht,
wobei die Anzeigeinformationen zumindest verschiedene Typen von Direktzugriffsantworten anzeigen können, und die Anzeigeinformationen zweite Anzeigeinformationen umfassen, die zum Anzeigen verschiedener Typen von Direktzugriffsantworten ausgelegt sind;
**dadurch gekennzeichnet, dass**,
wenn die Anzeigeinformationen nur die zweiten Anzeigeinformationen umfassen, eine Direktzugriffspräambelkennung, RAPID, die aus den zweiten Anzeigeinformationen erfasst wird, mit der RAPID übereinstimmt, die von der Endgerätevorrichtung gesendet wird, und der Direktzugriffsprozesstyp, der durch die zweiten Anzeigeinformationen angezeigt wird, mit dem Direktzugriffsprozesstyp übereinstimmt, der von der Endgerätevorrichtung ausgewählt wird, und bestimmt wird, dass die Direktzugriffsantwort in der Direktzugriffsantwortnachricht eine Antwort für die Endgerätevorrichtung ist,
oder
wenn die Anzeigeinformationen nur die zweiten Anzeigeinformationen umfassen, die aus den zweiten Anzeigeinformationen erfasste RAPID mit der RAPID übereinstimmt, die von der Endgerätevorrichtung gesendet wird, und der Direktzugriffsantworttyp, der durch die zweiten Anzeigeinformationen angezeigt wird, dem Direktzugriffsprozesstyp entspricht, der von der Endgerätevorrichtung ausgewählt wird, und bestimmt wird, dass die Direktzugriffsantwort in der Direktzugriffsantwortnachricht eine Antwort für die Endgerätevorrichtung ist.

2. Verfahren nach Anspruch 1, wobei es sich bei den zweiten Anzeigeinformationen um ein erstes Anzeigefeld in der Direktzugriffsantwort handelt.

3. Verfahren nach Anspruch 1, wobei es sich bei den zweiten Anzeigeinformationen um ein zweites Anzeigefeld in einem Medienzugriffssteuerungs-,MAC-,Subheader handelt, der der Direktzugriffsantwort entspricht.

4. Verfahren nach Anspruch 1, wobei es sich bei den zweiten Anzeigeinformationen um ein drittes Anzeigefeld in einem Medienzugriffssteuerungs-,MAC-,Subheader handelt, der der Direktzugriffsantwort entspricht, und das dritte Anzeigefeld zum Anzeigen einer Direktzugriffsantwortlänge ausgelegt ist, wobei verschiedene Direktzugriffsantwortlängen verschiedenen Typen von Direktzugriffsprozessen entsprechen, oder verschiedene Direktzugriffsantwortlängen verschiedenen Typen von Direktzugriffsantworten entsprechen.

5. Verfahren nach Anspruch 4, wobei eine erste Direktzugriffsantwortlänge einem 2-stufigen Direktzugriffsprozesstyp entspricht, und eine zweite Direktzugriffsantwortlänge einem 4-stufigen Direktzugriffsprozesstyp entspricht.

6. Verfahren nach Anspruch 1, wobei eine Direktzugriffspräambel von der Endgerätevorrichtung auf einer vorkonfigurierten Direktzugriffsressource gesendet und von der Endgerätevorrichtung aus mindestens zwei Direktzugriffspräambeln ausgewählt wird.

7. Verfahren nach einem der Ansprüche 1 bis 6, ferner aufweisend:
Initiieren verschiedener Direktzugriffsprozesse durch die Endgerätevorrichtung auf verschiedenen Direktzugriffsressourcen.

8. Verfahren nach Anspruch 7, wobei die Direktzugriffsressourcen Entsprechungen mit den Direktzugriffsprozesstypen aufweisen, und
die Direktzugriffsressourcen mindestens eine von einer Zeit-Frequenz-Ressource oder einer Direktzugriffspräambel umfassen.

9. Endgerätevorrichtung, umfassend:

eine erste Kommunikationseinheit (82), die zum Empfangen einer Direktzugriffsantwortnachricht ausgelegt ist, die von einer Netzwerkseite gesendet wird; und
eine erste Verarbeitungseinheit (81), die so ausgelegt ist, dass sie basierend auf Anzeigeinformationen in der Direktzugriffsantwortnachricht bestimmt, ob eine Direktzugriffsantwort in der Direktzugriffsantwortnachricht eine Antwort an die Endgerätevorrichtung ist,
wobei die Anzeigeinformationen zumindest verschiedene Typen von Direktzugriffsantworten anzeigen können, und die Anzeigeinformationen ferner zweite Anzeigeinformationen umfassen, die zum Anzeigen verschiedener Typen von Direktzugriffsantworten ausgelegt sind;
**dadurch gekennzeichnet, dass**,
wenn die Anzeigeinformationen nur die zweiten Anzeigeinformationen umfassen, eine Direktzugriffspräambelkennung, RAPID, die aus den zweiten Anzeigeinformationen erfasst wird, mit der RAPID übereinstimmt, die von der Endgerätevorrichtung gesendet wird, und der Direktzugriffsprozesstyp, der durch die zweiten Anzeigeinformationen angezeigt wird, mit dem Direktzugriffsprozesstyp übereinstimmt, der von der Endgerätevorrichtung ausgewählt wird, und die erste Verarbeitungseinheit so ausgelegt ist, dass sie bestimmt, dass die Direktzugriffsantwort in der Direktzugriffsantwortnachricht eine Antwort für die Endgerätevorrichtung ist, oder
wenn die Anzeigeinformationen nur die zweiten Anzeigeinformationen umfassen, die aus den zweiten Anzeigeinformationen erfasste RAPID mit der RAPID übereinstimmt, die von der Endgerätevorrichtung gesendet wird, und der Direktzugriffsantworttyp, der durch die zweiten Anzeigeinformationen angezeigt wird, dem Direktzugriffsprozesstyp entspricht, der von der Endgerätevorrichtung ausgewählt wird, und die erste Verarbeitungseinheit so ausgelegt ist, dass sie bestimmt, dass die Direktzugriffsantwort in der Direktzugriffsantwortnachricht eine Antwort für die Endgerätevorrichtung ist.

10. Endgerätevorrichtung nach Anspruch 9, wobei es sich bei den zweiten Anzeigeinformationen um ein erstes Anzeigefeld in der Direktzugriffsantwort handelt.

**Revendications**

1. Procédé d'accès aléatoire, appliqué à un dispositif terminal, le procédé comprenant les étapes suivantes :

   recevoir (201) un message de réponse d'accès aléatoire envoyé par un côté réseau ; et
   déterminer (202) si une réponse d'accès aléatoire dans le message de réponse d'accès aléatoire est sensible au dispositif terminal sur la base d'informations d'indication dans le message de réponse d'accès aléatoire, où les informations d'indication sont capables d'indiquer au moins différents types de réponses d'accès aléatoire, et les informations d'indication comprennent des deuxièmes informations d'indication configurées pour indiquer différents types de réponses d'accès aléatoire ;
   **caractérisé en ce que** :

   lorsque les informations d'indication ne comprennent que les deuxièmes informations d'indication, un identifiant de préambule d'accès aléatoire, RAPID, acquis à partir des deuxièmes informations d'indication est cohérent avec le RAPID envoyé par le dispositif terminal et le type de processus d'accès aléatoire indiqué par les deuxièmes informations d'indication est cohérent avec le type de processus d'accès aléatoire sélectionné par le dispositif terminal, déterminer que la réponse d'accès aléatoire dans le message de réponse d'accès aléatoire est une réponse pour le dispositif terminal ;
   ou,
   lorsque les informations d'indication comprennent uniquement les deuxièmes informations d'indication, le RAPID acquis à partir des deuxièmes informations d'indication est cohérent avec le RAPID envoyé par le dispositif terminal et le type de réponse d'accès aléatoire indiqué par les deuxièmes informations d'indication correspond au type de processus d'accès aléatoire sélectionné par le dispositif terminal, déterminer que la réponse d'accès aléatoire dans le message de réponse d'accès aléatoire est une réponse pour le dispositif terminal.

2. Procédé selon la revendication 1, dans lequel les deuxièmes informations d'indication sont un premier champ d'indication dans la réponse d'accès aléatoire.

3. Procédé selon la revendication 1, dans lequel les deuxièmes informations d'indication sont un deuxième champ d'indication dans un sous-en-tête de contrôle d'accès au support, MAC, correspondant à la réponse d'accès aléatoire.

4. Procédé selon la revendication 1, dans lequel les deuxièmes informations d'indication sont un troisième champ d'indication dans un sous-en-tête de contrôle d'accès au support, MAC, correspondant à la réponse d'accès aléatoire, et
   le troisième champ d'indication est configuré pour indiquer une longueur de réponse d'accès aléatoire, des longueurs de réponse d'accès aléatoire différentes correspondant à différents types de processus d'accès aléatoire, ou des longueurs de réponse d'accès aléatoire différentes correspondant à différents types de réponses d'accès aléatoire.

5. Procédé selon la revendication 4, dans lequel une première longueur de réponse d'accès aléatoire correspond à un type de processus d'accès aléatoire à 2 étapes, et une deuxième longueur de réponse d'accès aléatoire correspond à un type de processus d'accès aléatoire à 4 étapes.

6. Procédé selon la revendication 1, dans lequel un préambule d'accès aléatoire est envoyé par le dispositif terminal sur une ressource d'accès aléatoire préconfigurée et est sélectionné par le dispositif terminal parmi au moins deux préambules d'accès aléatoire.

7. Procédé selon l'une quelconque des revendications 1 à 6, comprenant en outre :
   le lancement, par le dispositif terminal, de différents processus d'accès aléatoire sur différentes ressources d'accès aléatoire.

8. Procédé selon la revendication 7, dans lequel les ressources d'accès aléatoire ont des correspondances avec les types de processus d'accès aléatoire, et
   les ressources d'accès aléatoire comprennent au moins une ressource temps-fréquence ou un préambule d'accès aléatoire.

**9.** Dispositif terminal, comprenant :

une première unité de communication (82), configurée pour recevoir un message de réponse d'accès aléatoire envoyé par un côté réseau ; et

une première unité de traitement (81), configurée pour déterminer si une réponse d'accès aléatoire dans le message de réponse d'accès aléatoire est sensible au dispositif terminal sur la base d'informations d'indication dans le message de réponse d'accès aléatoire,

où les informations d'indication sont capables d'indiquer au moins différents types de réponses d'accès aléatoire, et les informations d'indication comprennent en outre des deuxièmes informations d'indication configurées pour indiquer différents types de réponses d'accès aléatoire ;

**caractérisé en ce que**,

lorsque les informations d'indication ne comprennent que les deuxièmes informations d'indication, un identifiant de préambule d'accès aléatoire, RAPID, acquis à partir des deuxièmes informations d'indication est cohérent avec le RAPID envoyé par le dispositif terminal et le type de processus d'accès aléatoire indiqué par les deuxièmes informations d'indication est cohérent avec le type de processus d'accès aléatoire sélectionné par le dispositif terminal, la première unité de traitement est configurée pour déterminer que la réponse d'accès aléatoire dans le message de réponse d'accès aléatoire est une réponse pour le dispositif terminal ;

ou,

lorsque les informations d'indication comprennent uniquement les deuxièmes informations d'indication, le RAPID acquis à partir des deuxièmes informations d'indication est cohérent avec le RAPID envoyé par le dispositif terminal et le type de réponse d'accès aléatoire indiqué par les deuxièmes informations d'indication correspond au type de processus d'accès aléatoire sélectionné par le dispositif terminal, la première unité de traitement est configurée pour déterminer que la réponse d'accès aléatoire dans le message de réponse d'accès aléatoire est une réponse pour le dispositif terminal.

**10.** Dispositif terminal selon la revendication 9, dans lequel les deuxièmes informations d'indication sont un premier champ d'indication dans la réponse d'accès aléatoire.

**100**

**FIG. 1**

```
                                                          201
┌─────────────────────────────────────────────────────────────┐
│                                                               │
│   A random access response message sent by a network side is received │
│                                                               │
└─────────────────────────────────────────────────────────────┘
                              │
                              ▼                             202
┌─────────────────────────────────────────────────────────────┐
│   Whether a random access response in the random access response │
│   message is responsive to a terminal device is determined based on │
│   indication information in the random access response message │
└─────────────────────────────────────────────────────────────┘
```

**FIG. 2**

| E | T | R | R | BI | Oct 1 |
|---|---|---|---|----|-------|

**FIG. 3**

| E | T | RAPID | Oct 1 |
|---|---|-------|-------|

**FIG. 4**

| E/T/R/R/BI Subheader | E/T/RAPID Subheader | E/T/RAPID Subheader | MAC RAR |
|---|---|---|---|

| MAC sub PDU 1 (only BI) | MAC sub PDU 2 (only RAPID) | MAC sub PDU 3 (RAPID and RAR) | MAC sub PDU 4 | ······ | MAC sub PDU n | Filling (optional) |
|---|---|---|---|---|---|---|

**FIG. 5**

| | | | |
|---|---|---|---|
| R | R | R | Timing advance command | Oct 1 |
| Timing advance command | | | UL grant | Oct 2 |
| UL grant | | | | Oct 3 |
| UL grant | | | | Oct4 |
| UL grant | | | | Oct 5 |
| Temporary C-RNTI | | | | Oct 6 |
| Temporary C-RNTI | | | | Oct 7 |

**FIG. 6**

UE          gNB

① —— Random access preamble ——→

←—— Random access response —— ②

③ —— Scheduled transmission ——→

←—— Connection solution —— ④

UE          gNB

⓪ ←—— Random access preamble allocation ——

—— Random access preamble ——→ ①

② ←—— Random access response ——

**FIG. 7**

| First processing unit 82 | ——— | First communication unit 81 |
|---|---|---|

**FIG. 8**

Communication device 900

Memory
920

Processor
910

Transceiver
930

**FIG. 9**

Chip 1000

Input interface
1030

Processor
1010

Memory
1020

Output
interface 1040

**FIG. 10**

Communication system 1100

1110

Terminal device

1120

Network device

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT.** Consideration on 2-step RA. *3GPP DRAFT; R2-1700205, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE,* 17 January 2017